## Europäisches Patentamt

## European Patent Office

## Office européen des brevets

(11) Veröffentlichungsnummer: **0 021 227**
**A2**

# EUROPÄISCHE PATENTANMELDUNG

(21) Anmeldenummer: 80103212.9

(22) Anmeldetag: 10.06.80

(51) Int. Cl.³: **B 60 B 1/02**, B 60 B 3/06

(30) Priorität: 11.06.79 AT 4168/79

(43) Veröffentlichungstag der Anmeldung: 07.01.81
Patentblatt 81/1

(84) Benannte Vertragsstaaten: **BE CH DE FR GB IT LI NL**

(71) Anmelder: **Vereinigte Metallwerke Ranshofen-Berndorf AG, Wohllebengasse 9, A-1041 Wien IV (AT)**

(72) Erfinder: **Streicher, Rudolf, Dipl.-Ing., Wohllebengasse 9, A-1040 Wien (AT)**
Erfinder: **Pöll, Manfred, Dipl.-Ing., Silvaraweg 11, A-1190 Wien (AT)**

(74) Vertreter: **Hain, Leonhard, Dipl.-Ing., Tal 18/IV, D-8000 München 2 (DE)**

(54) **Aluminiumrad für Fahrzeuge.**

(57) Bei einem Aluminiumrad für Fahrzeuge ist die Felge (4) aus einer Knetlegierung, vorzugsweise AIMgSi1 oder AIZn4,5Mg1, und die damit verschweißte Radschüssel (1) aus einer Gußlegierung, vorzugsweise GK (GD)–AISi12 oder GK–AISi7Mg, ausgeführt, um eine große Gewichtseinsparung und eine vielfältige Gestaltungsmöglichkeit zu erzielen. Zum Verschweißen sind in der Radschüssel (1) Eingießteile (7) aus der Knetlegierung der Felge (4) verankert.

- 1 -

Anmelder: Vereinigte Metallwerke Ranshofen-Berndorf AG,
Braunau am Inn, Österreich

Titel:    Aluminiumrad für Fahrzeuge

Beschreibung:

Die Erfindung betrifft ein Aluminiumrad für Fahrzeuge aus einer Felge und einer damit verschweißten Radschüssel.

In dem Bestreben, die Fahrzeugmasse zu verringern, um dadurch den Kraftstoffverbrauch zu vermindern, werden in steigendem Maße Leichtmetallteile anstelle von Stahlteilen beim Fahrzeugbau verwendet.

Bei der Leichtbauweise des Fahrwerks kommt dem Aluminiumrad ein wesentlicher Anteil zu. Dieses kann entweder durch Gießen, durch Schmieden oder auch durch ein anderes Fertigungsverfahren hergestellt werden. Bevorzugt werden Aluminiumräder, die im Niederdruckkokillengußverfahren hergestellt sind, wobei die Guß-Legierungen AlSi12, AlSi12Mg und AlSi7Mg verwendet werden. Geschmiedete Räder sind hauptsächlich in einer Legierung vom Typ AlMgSi1wa gefertigt. Eine dritte Variante ist ein Aluminiumrad aus Aluminiumblech, dessen Aufbau und Herstellung etwa der des Stahlrades entspricht. Zur Herstellung der Felge wird hierbei ein Blechband zum Kreiszylinder gebogen und dessen Enden durch Abbrennstumpfschweißen verbunden. Dieser Kreiszylinder wird durch Rollformen zum gewünschten Felgenquerschnitt umgeformt. Die Radschüssel wird durch Tiefziehen und Stanzen hergestellt. Beide Teile werden durch Schweißen miteinander verbunden. Die Masseersparnis ist bei dieser Ausführungsform zwar am größten, doch ist dieses Rad hinsichtlich der Gestaltungsmöglichkeiten dem gegossenen Rad unterlegen.

Der Erfindung liegt daher die Aufgabe zugrunde, ein Aluminiumrad zu schaffen, das bei größtmöglicher Gewichtseinsparung einer vielfältigen Gestaltungsmöglichkeit zugänglich ist.

Zur Lösung dieser Aufgabe ist ein Aluminiumrad der eingangs genannten Art gemäß der Erfindung dadurch gekennzeichnet, daß der eigentliche Felgenteil aus einer Knetlegierung, vorzugsweise AlMgSi1 oder AlZn4,5Mg1, die Radschüssel jedoch aus einer Gußlegierung, vorzugsweise GK (GD) - AlSi12 oder GK - AlSi7Mg, ausgeführt ist.

Dadurch sind die Vorteile der Blechfelge mit ihrer größeren Gewichtseinsparung und einer gegossenen Radschüssel mit ihrer freien Gestaltungsmöglichkeit gegeben. Es ist auf diese Weise möglich, sowohl ein Lochscheibenrad als auch ein Speichenrad herzustellen. Außerdem besteht noch die Möglichkeit, anstelle des Blechbandes zur Fertigung der Felge ein entsprechend geformtes Preßprofil, das ebenfalls zum Kreiszylinder gebogen und verschweißt wird, zu verwenden. Als Werkstoff für die Felge eignet sich besonders die hochfeste Legierung AlZn4,5Mg1 nach ÖNORM M 3430, bzw. DIN 1725 Teil 1. Die Radschüssel selbst kann z.B. aus der gut vergießbaren Legierung AlSi12 in Kokillen- oder Druckgießverfahren hergestellt werden.

Da Leichtmetall-Knet- und Gußwerkstoffe nicht befriedigend miteinander verschweißt werden können, ist es erforderlich, den Gußteil mit einem Eingießteil bzw. Eingießteilen auszubilden, die in ihrer chemischen Zusammensetzung dem Werkstoff der Felge entsprechen. Auf diese Weise ist es möglich, einwandfreie Schweißverbindungen herzustellen, wobei als Zusatzwerkstoff S-AlMg4,5Mn oder S-AlMg5 nach ÖNORM M7825 bzw. DIN 1732 Teil 1 verwendet wird. Gegenüber allen anderen aushärtbaren Aluminiumwerkstoffen zeichnet sich die Legierung AlZn4,5Mg1 durch einen sehr breiten Temperaturbereich für das Lösungsglühen, eine geringe Abschreckempfindlichkeit sowie eine verhältnismäßig große Trägheit der Aushärtung, insbesondere bei Raumtemperatur, aus. Die beim Schweißen eingebrachte Wärme wirkt hier daher vornehmlich wie ein erneutes Lösungsglühen und die Abkühlung des Rades nach dem Schweißen wegen der guten Wärmeleitfähigkeit wie ein mildes Abschrecken. Dies bringt mit sich, daß die Festigkeitswerte in der Wärmeeinflußzone unmittelbar nach dem Schweißen ebenfalls zunächst noch verhältnismäßig niedrig liegen, bei einer anschließenden Auslagerung bei Raumtemperatur oder erhöhten Temperaturen ($120^o$ bis $130^o$C) wieder in starkem Maße ansteigen. So wird nach einer Raumtemperatur-Lagerung von drei Monaten fast wieder der Ausgangszustand erreicht, während dazu bei $120^o$C nur 24 Stunden erforderlich sind.                                    —

Die Erfindung ist in der Zeichnung beispielsweise dargestellt. Es zeigen:

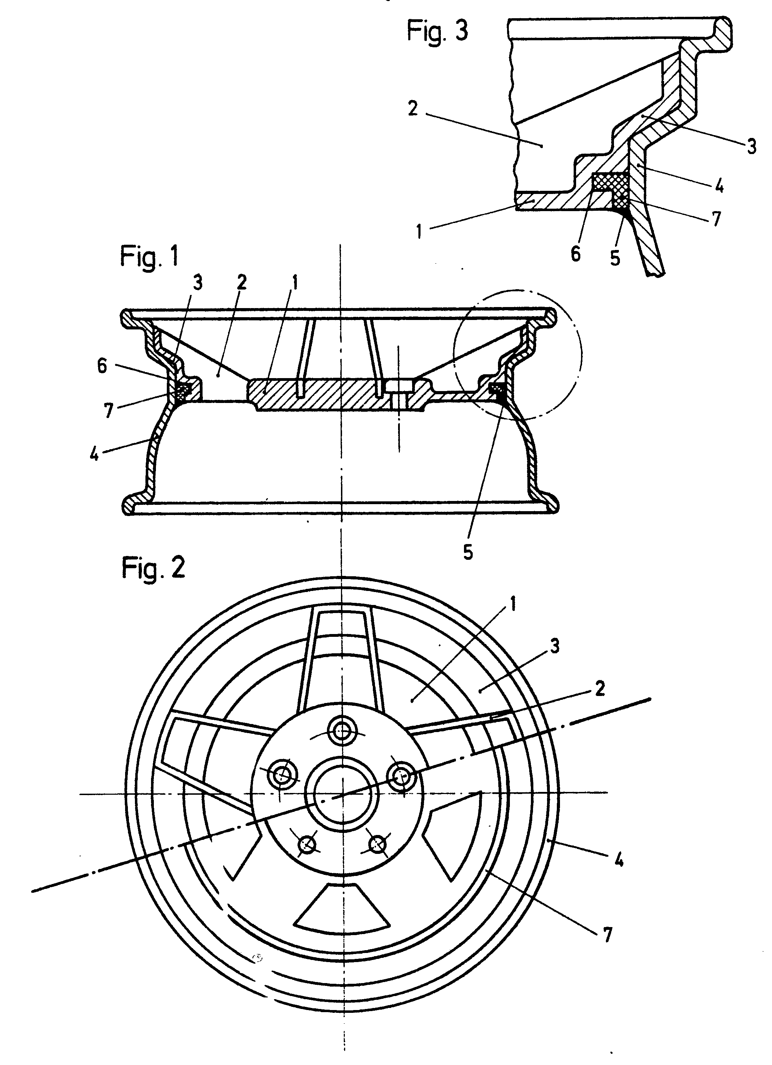

Fig. 1    eine Felge im Schnitt nach der Linie B-B der Fig. 2,

Fig. 2    eine Seitenansicht, wobei die Vorderseite in der oberen Hälfte und die Rückseite in der unteren Hälfte der Figur veranschaulicht ist und

Fig. 3    einen Detail-Ausschnitt der Fig. 1, vergrößert.

Wie aus der Zeichnung ersichtlich ist, ist auf einer gegossenen Radschüssel 1 mit Speichen 2 und einem Umfangsring 3 ein Tiefbettfelgenkranz 4 aufgesetzt. Die Befestigung erfolgt mittels Schweißung 5 an einem in einer Nut 6 des Umfangsringes 3 eingegossenen Winkelprofilring 7. Dieser Winkelprofilring 7 aus demselben Material wie der Tiefbettfelgenkranz 4 ist daher außen an der Rückseite sichtbar, sonst aber in der Radschüssel 1 fest verankert, so daß er auch axial nicht herausgezogen werden kann. Die Nut 6 kann auch als hinterschnittene T- oder Schwalbenschwanznut ausgebildet sein.

Die Erfindung ist nicht auf das dargestellte Ausführungsbeispiel beschränkt, da anstelle eines Profilringes auch Einzelteile eingegossen und auch durch Lochverwindung im Tiefbettfelgenteil verbunden sein können. Natürlich ist es auch möglich, verschiedene Metalle zu kombinieren, etwa eine Aluminiumgußnabe mit einem Stahlkranz, z.B. bei Schienenfahrzeugen.

0021227

Anmelder: Vereinigte Metallwerke Ranshofen-Berndorf AG,
Braunau am Inn, Österreich

Titel:    Aluminiumrad für Fahrzeuge


Patentansprüche

1. Aluminiumrad für Fahrzeuge aus einer Felge und einer damit verschweißten Radschüssel, dadurch gekennzeichnet, daß der eigentliche Felgenteil (4) aus einer Knetlegierung und die Radschüssel (1) aus einer Gußlegierung ausgeführt ist.

2. Aluminiumrad nach Anspruch 1, dadurch gekennzeichnet, daß die Felge (4) aus einer Knetlegierung aus AlMgSi1 oder AlZn4,5Mg1 gefertigt ist.

3. Aluminiumrad nach Anspruch 1 oder 2, dadurch gekennzeichnet, daß die Radschüssel (1) aus einer Gußlegierung aus GK (GD) – AlSi12 oder GK – AlSi7Mg gefertigt ist.

4. Aluminiumrad nach einem der Ansprüche 1 bis 3, dadurch gekennzeichnet, daß zur Erzielung einer einwandfreien Schweißverbindung zwischen Radfelge (4) und Radschüssel (1) in der Radschüssel (1) Eingießteile (7) aus der gleichen Knetlegierung, aus der auch die Radfelge (4) besteht, vorgesehen sind.

5. Aluminiumrad nach einem der Ansprüche 1 bis 4, dadurch gekennzeichnet, daß die Radfelge (4) aus einem Blechstreifen hergestellt ist.

6. Aluminiumrad nach einem der Ansprüche 1 bis 4, dadurch gekennzeichnet, daß die Radfelge (4) aus einem Preßprofil hergestellt ist.

7. Aluminiumrad nach einem der Ansprüche 1 bis 6, dadurch gekennzeichnet, daß die Radfelge (4) aus einer warmausge-

härteten Aluminiumknetlegierung, vorzugsweise AlZn4,5Mg1, hergestellt ist.

8. Aluminiumrad nach einem der Ansprüche 1 bis 7, dadurch gekennzeichnet, daß die Eingießteile als Winkelprofilring (7) ausgebildet sind, der in einer Nut (6) der Radschüssel (1) verankert und zur Anbringung der Schweißung (5) an seiner Rückseite frei ist.

0021227

Fig. 3

Fig. 1

Fig. 2